# FASCICULE DE BREVET EUROPEEN

(11) **EP 0 539 299 B1**
(45) Date de publication et mention de la délivrance du brevet: **17.01.1996**
(21) Numéro de dépôt: 92402890.5
(22) Date de dépôt: 22.10.1992
(51) Int. Cl.: A47J 27/16, A47J 39/00

(54) **Appareil de cuisson mixte par rayonnement et vapeur**
Gargerät mit einer Kombination von Strahlungs- und Dampfheizung
Cooking apparatus combining steam and radiation heating

(30) Priorité: 23.10.1991 FR 9113104
(43) Date de publication de la demande: 28.04.1993
(73) Titulaire: DOREGRILL S.A., F-44880 Sautron (FR)
(72) Inventeur: Bertho, Pierre, F-44300 Nantes (FR)
(74) Mandataire: Dawidowicz, Armand

(56) Documents cités:
- EP-A- 0 279 065
- EP-A- 0 317 444
- DE-A- 2 802 921
- FR-A- 2 458 260
- FR-A- 2 600 756
- FR-A- 2 625 795
- US-A- 4 851 644

## Description

La présente invention concerne un appareil de cuisson à vapeur du type comprenant d'une part une enceinte avec au moins des moyens de chauffage à rayonnement infrarouge et un porte-aliment de préférence rotatif monté à l'intérieur de l'enceinte, ledit porte-aliment présentant un aliment susceptible d'être cuit et doré.

Les appareils de type fours équipés de grills ou les rôtissoires présentent certains inconvénients et en particulier conduisent à un temps de cuisson long, favorisent le salissement des parois de l'enceinte par des projections de graisse résultant de la combinaison de la rotation de l'aliment et de l'évacuation des graisses hors de cet aliment sous l'effet de rayonnement et enfin entraînent le dessèchement de l'aliment.

Pour pallier aux inconvénients de dessèchement, on a mis au point des appareils de cuisson où on réduit le temps de cuisson en associant au dispositif de cuisson traditionnel un générateur de vapeur permettant l'introduction de vapeur d'eau dans l'enceinte du four ou de l'appareil de cuisson en quantité contrôlée. Deux brevets français décrivent plus particulièrement l'association d'un appareil de cuisson type rôtissoire à un générateur de vapeur. Il s'agit du brevet FR 2600756 antérieur au brevet 2625795. Les générateurs de vapeur les plus performants sont généralement disposés hors de l'enceinte et comportent une réserve d'alimentation en eau indépendante de l'enceinte de chauffage et d'évaporation proprement dite, la réserve d'eau étant reliée à l'enceinte par des moyens de régulation de l'admission d'eau. Ce type de générateur de vapeur est décrit dans le brevet FR 2491595 où l'arrivée d'eau dans l'enceinte de chauffage ou d'évaporation est commandée par une vanne, dans le brevet GB 2176695 qui décrit une électrovanne ouverte ou fermée selon que le moyen de chauffage du dispositif de cuisson est alimenté ou non alimenté permettant ainsi différents modes de cuissons (air, air/vapeur, vapeur). Enfin, le brevet FR 2625795 décrit un générateur de vapeur où l'arrivée d'eau est également contrôlable mais où l'enceinte de chauffage du générateur de vapeur est de construction très complexe.

Tous ces dispositifs répondent de manière satisfaisante au problème de la dessication des aliments pendant la cuisson en diminuant le temps de cuisson, mais ce temps reste cependant trop élevé pour supprimer les problèmes de salissures des parois. Ces problèmes de nettoyage des parois ont été résolus dans les fours traditionnels par utilisation de techniques telles que la catalyse ou la pyrolyse. Ces techniques sont coûteuses à mettre en oeuvre au niveau de leur installation dans l'appareil et nécessitent une interruption de l'utilisation de l'appareil pendant une période relativement longue (généralement plusieurs heures) lors de leur mise en oeuvre.

Le but de la présente invention est donc de résoudre le problème d'encrassement des parois en proposant un dispositif de nettoyage, intégré à l'appareil de cuisson, simple, peu onéreux et facile à mettre en oeuvre et qui combine également les avantages de la cuisson à la vapeur.

L'invention concerne à cet effet un appareil de cuisson à vapeur avec porte-aliment du type comprenant une enceinte avec au moins des moyens de chauffage à rayonnement infrarouge, une broche de préférence rotative montée à l'intérieur de l'enceinte, un générateur de vapeur disposé à l'extérieur de l'enceinte et relié à cette dernière par une canalisation d'amenée de vapeur, ledit générateur comportant une enceinte équipée de moyens de chauffage, une source d'alimentation en eau et des moyens de régulation de l'admission d'eau dans l'enceinte du générateur, caractérisé en ce qu'il comporte des moyens de sélection pour sélectionner un premier mode de fonctionnement dans lequel les moyens de chauffage à infrarouge et le générateur de vapeur fonctionnent et un deuxième mode de fonctionnement dans lequel le générateur de vapeur fonctionne et les moyens de chauffage à infrarouge ne fonctionnent pas, lesdits moyens de sélection coopérant avec les moyens de régulation de l'admission d'eau dans l'enceinte du générateur de vapeur, qui autorisent une admission d'eau dans l'enceinte du générateur de vapeur au plus égale à une valeur de débit W₁ dans le premier mode de fonctionnement et au plus égale à une valeur de débit W₂ dans le deuxième mode de fonctionnement, W₁ étant inférieure à W₂.

D'autres caractéristiques et avantages de l'invention apparaîtront encore à la lecture de la description détaillée qui suit et des dessins joints, lesquels description et dessins étant donnés surtout à titre d'exemples. Dans ces dessins :
la figure 1 représente un organigramme du fonctionnement de l'appareil lorsque le premier mode de fonctionnement est sélectionné ;
la figure 2 représente un organigramme du fonctionnement de l'appareil lorsque le deuxième mode de fonctionnement est sélectionné.

Conformément à l'invention, l'appareil de cuisson à vapeur se présente sous forme d'un appareil classique avec une enceinte équipée de rampes de chauffe à infrarouge disposées de préférence en dessous de la paroi supérieure de l'enceinte, un support d'aliments mobile et un générateur de vapeur constitué par exemple d'une zone d'évaporation se présentant sous la forme d'une enceinte dont la paroi inférieure est chauffée par une résistance, un réservoir d'eau constituant la source d'alimentation en eau et relié à l'enceinte par une canalisation munie d'un moyen de régulation du débit d'eau et donc de l'admission d'eau dans l'enceinte du générateur de vapeur. Ce générateur est disposé à l'extérieur de l'enceinte de chauffage de l'appareil mais il est de préférence intégré dans un boîtier solidaire du bâti de l'appareil de cuisson. Le générateur de vapeur est relié à l'enceinte de cuisson de l'appareil de cuisson par une canalisation qui débouche dans l'enceinte de cuisson de préférence dans sa partie supérieure et qui est prolongée par une rampe tubulaire percée d'une pluralité d'orifices dirigés de manière à permettre une bonne répartition de la vapeur produite dans l'enceinte de cuisson.

La quantité de vapeur produite par le générateur de vapeur est fonction du mode de fonctionnement de l'appareil. Le mode de fonctionnement de l'appareil est choisi par actionnement de moyens de sélection disposés par exemple sur le tableau de commande de l'appareil. Ces moyens de sélection peuvent affecter des formes diverses telles que des boutons poussoir, des interrupteurs, etc. Au moins deux modes de fonctionnement peuvent être proposés. Dans le premier mode de fonctionnement, le moyens de chauffage à infrarouge et le générateur de vapeur fonctionnent. Dans ce cas, on parle d'un mode combiné cuisson infrarouge/vapeur qui sera utilisé pour la cuisson d'un aliment dont on veut éviter notamment le dessèchement. Il est également possible de sélectionner un deuxième mode de fonctionnement dans lequel le générateur de vapeur est alimenté et les moyens de chauffage à infrarouge ne sont pas alimentés. Dans ce cas, on parle d'un mode nettoyage. En effet, la production de vapeur est maximale, car asservi au mode de fonctionnement, le moyen de régulation de l'admission d'eau dans l'enceinte du générateur de vapeur entraînent une production importante de vapeur. Dans ce cas, la vapeur est dirigée sur les parois de l'enceinte de cuisson et permet le nettoyage de ces dernières. Au contraire, le premier mode de fonctionnement, dans lequel la production de vapeur maximale est fonction de la détermination d'une valeur d'admission d'eau maximale dans l'enceinte du générateur de vapeur inférieure à celle choisie dans le cadre du deuxième mode de fonctionnement, la production de vapeur a notamment pour fonction d'éviter la dessication des aliments. Ces valeurs maximales de débit d'eau désignées respectivement par W₁ et W₂ correspondent donc en fait à des débits d'eau maxima au niveau de l'alimentation de l'enceinte du générateur de vapeur. On peut imaginer également un troisième mode de fonctionnement de l'appareil sélectionné de la même manière que les deux précédents, ce troisième mode de fonctionnement étant constitué par le fonctionnement unique des moyens de chauffage de l'enceinte de cuisson de l'appareil ce qui correspond au mode de fonctionnement d'un appareil parfaitement classique.

Pour obtenir une production de vapeur variable d'un mode de fonctionnement à un autre, le générateur de vapeur comporte des moyens de régulation de l'admission d'eau dans l'enceinte du générateur. Ces moyens de régulation sont constitués par une électrovanne ou un limiteur proportionnel associé à une vanne, disposés sur la canalisation d'arrivée d'eau à l'enceinte du générateur de vapeur. Cette électrovanne ou ce limiteur autorisent un débit d'eau maximal W₁, W₂ fonction du mode de fonctionnement de l'appareil de cuisson. Quand l'appareil de cuisson est en mode cuisson infrarouge/vapeur, l'ouverture maximale de l'électrovanne ou du limiteur ou de n'importe quel autre moyen de régulation du débit d'eau correspond à un débit W₁ qui généralement est de l'ordre de 1 à 1,5 litre/heure. Quand l'appareil de cuisson est en mode de fonctionnement nettoyage, l'ouverture maximale de l'électrovanne ou du limiteur ou de n'importe quel autre moyen de régulation du débit d'eau correspond à un débit W₂ qui généralement est de l'ordre de 3 à 4,5 litres/heure. Bien évidemment, à l'intérieur de cette plage de débit [0-W₁] ou [0-W₂], l'ouverture de l'électrovanne peut varier de manière à faire varier le débit. Cette ouverture de l'électrovanne peut notamment varier en fonction de la température de l'enceinte chauffée du générateur de vapeur.

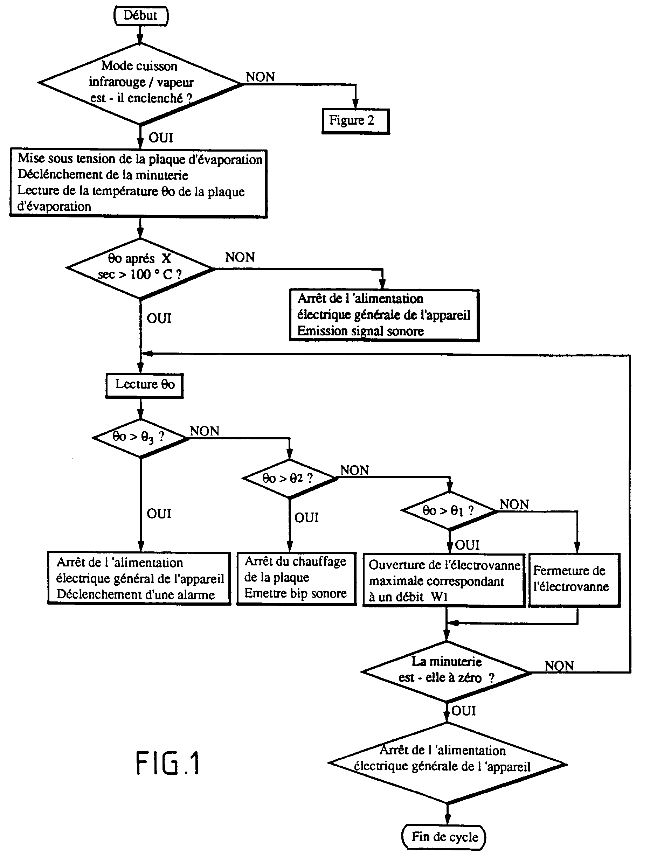

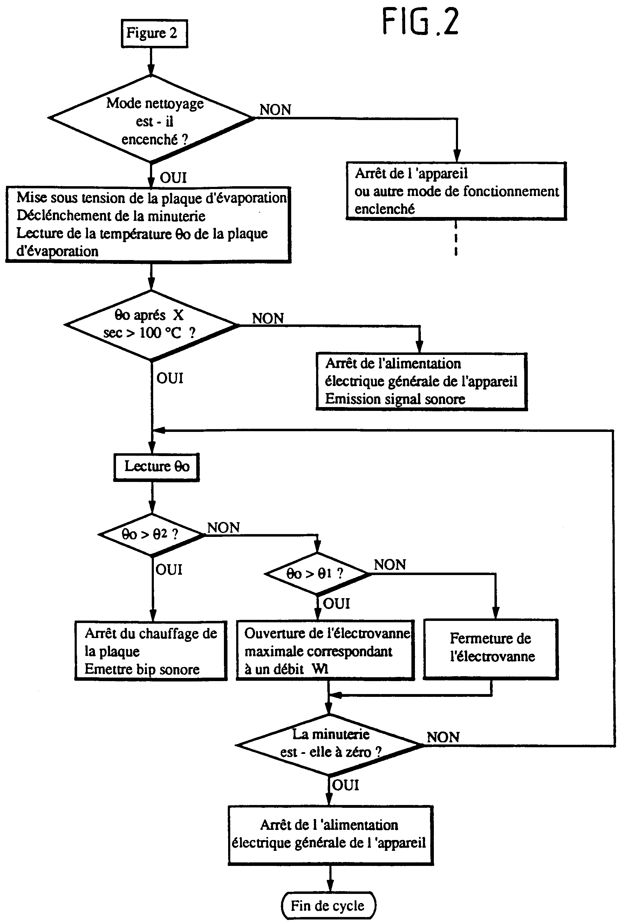

Ainsi, conformément à la figure 1, dans le cas où le mode de fonctionnement cuisson infrarouge/vapeur est choisi, on met sous tension la plaque d'évaporation du générateur de vapeur, on déclenche la minuterie de l'appareil de manière à la régler sur le temps de cuisson de l'aliment et on lit la température Θ₀ de la plaque d'évaporation du générateur de vapeur. Dans une étape ultérieure, Θ₀ est testée après environ 15 secondes à compter du déclenchement de la minuterie et on vérifie si Θ₀ est supérieure à 100°C. Dans la négative, l'alimentation électrique générale de l'appareil est stoppée et il est émis un signal sonore. Le fait que la température Θ₀ n'excède pas 100°C après quelques secondes de mise en fonctionnement du générateur de vapeur signifie généralement que le capteur de température en l'occurrence une sonde thermique disposée au niveau de l'une des parois de l'enceinte de chauffage du générateur de vapeur est défectueux. Dans le cas contraire, où Θ₀ excède 100°C après quelques secondes, on procède à nouveau à une lecture de Θ₀ . Si Θ₀ est supérieure à Θ₃ qui correspond à une température limite critique de fonctionnement proche de 140°C, l'alimentation électrique générale de l'appareil est stoppée, et une alarme est déclenchée pour informer l'utilisateur de la surchauffe. Si au contraire Θ₀ est inférieure à Θ₃ mais supérieure à Θ₂ qui correspond à une température de l'ordre de 120°C, le chauffage de la plaque d'évaporation du générateur de vapeur est arrêté et un bip sonore est émis. On se trouve dans une situation où, soit le réservoir d'alimentation en eau du générateur de vapeur est vide, soit le générateur de vapeur est trop entartré. Dans le cas, au contraire, où Θ₀ est inférieure à Θ₂ mais supérieure à Θ₁ qui correspond à la température optimale de densité d'évaporation, on ouvre l'électrovanne de telle sorte que son ouverture correspond à un débit maximal W₁ qui est généralement de l'ordre de 1,5 litre par heure. Au contraire, si Θ₀ est inférieur à Θ₁, cela signifie que la plaque d'évaporation du générateur de vapeur est trop alimentée en eau, en conséquence, il convient de fermer l'électrovanne. Par la suite, la minuterie de l'appareil de cuisson est testée et on vérifie si elle est égale à zéro. Dans le cas d'une réponse positive, cela signifie que la cuisson est terminée. On arrête alors l'alimentation électrique générale de l'appareil et le cycle prend fin. Dans le cas contraire, on reprend l'ensemble des étapes décrites ci-dessus à partir de la lecture de Θ₀. Dans un deuxième mode de fonctionnement représenté à la figure 2 qui correspond au mode nettoyage, on met en oeuvre les mêmes étapes que celles décrites précédemment à l'exception du test comparatif Θ₀, Θ₃ et à la différence près que l'ouverture de l'électrovanne correspond non plus à un débit maximal W₁ mais W₂ qui est de l'ordre de 4,5 litres par heure.

Il est à noter que dans le cas où on utilise un limiteur proportionnel, l'ouverture de la vanne est fonction de la différence de température entre Θ₀ et Θ₁, le maximum de l'ouverture correspondant toujours à un débit maximal égal à W₁ ou W₂ en fonction du mode de fonctionnement de l'appareil choisi.

On peut également imaginer que l'ouverture de l'électrovanne soit asservie au degré hygroscopique régnant à l'intérieur de l'enceinte de cuisson de l'appareil.

D'autres modes d'asservissement de l'ouverture de l'électrovanne peuvent être imaginés, il n'en demeure pas moins que la valeur maximale de cette ouverture restera toujours dépendante du mode de fonctionnement de l'appareil et que cette valeur sera choisie inférieure pour le mode cuisson infrarouge/vapeur par rapport au mode vapeur seule ou nettoyage.

## Revendications

1. Appareil de cuisson à vapeur du type comprenant une enceinte avec au moins des moyens de chauffage à rayonnement infrarouge et un porte-aliment de préférence rotatif monté à l'intérieur de l'enceinte, un générateur de vapeur disposé à l'extérieur de l'enceinte et relié à cette dernière par une canalisation d'amenée de vapeur, ledit générateur comportant une enceinte équipée de moyens de chauffage, une source d'alimentation en eau et des moyens de régulation de l'admission d'eau dans l'enceinte du générateur, caractérisé en ce qu'il comporte des moyens de sélection pour sélectionner un premier mode de fonctionnement dans lequel les moyens de chauffage à infrarouge et le générateur de vapeur fonctionnent et un deuxième mode de fonctionnement dans lequel le générateur de vapeur fonctionne et les moyens de chauffage à infrarouge ne fonctionnent pas, lesdits moyens de sélection coopérant avec les moyens de régulation de l'admission d'eau dans l'enceinte du générateur pour autoriser une admission d'eau dans l'enceinte du générateur de vapeur au plus égale à une valeur de débit W₁ dans le premier mode de fonctionnement et au plus égale à W₂ dans le deuxième mode de fonctionnement, W₁ étant inférieure à W₂ .

2. Appareil de cuisson à vapeur selon la revendication 1, caractérisé en ce que le moyen de régulation de l'admission d'eau dans l'enceinte du générateur de vapeur est une électrovanne.

3. Appareil de cuisson à vapeur selon la revendication 2, caractérisé en ce que l'ouverture de l'électrovanne maximale pour les valeurs de débit W₁ et W₂ varie à l'intérieur des plages [0-W₁], [0,W₂] en fonction de la température de l'enceinte du générateur de vapeur .

4. Appareil de cuisson à vapeur selon l'une des revendications 1 à 3, caractérisé en ce que le deuxième mode de fonctionnement constitue le mode nettoyage de l'appareil.

5. Appareil de cuisson à vapeur selon l'une des revendications 1 à 4, caractérisé en ce que la canalisation d'amenée de vapeur dans l'enceinte de l'appareil est prolongée à l'intérieur de l'enceinte par une rampe tubulaire équipée d'une pluralité d'ouvertures de manière à assurer une répartition correcte de la vapeur sur les parois de l'appareil.

## Claims

1. Steam cooking appliance of the type comprising a chamber with at least infrared radiation heating means and a food support which is preferably rotational mounted inside the chamber, a steam generator disposed outside the chamber and connected thereto by means of a steam inlet duct, the said generator comprising a chamber provided with heating means, a water supply source and means for adjusting the admission of water into the generator chamber, characterised in that it comprises selection means to select a first operating mode, in which the infrared heating means and the steam generator are operational, and a second operating mode, in which the steam generator is operational and the infrared heating means do not operate, the said selection means cooperating with the means for adjusting the admission of water into the chamber of the generator to permit an admission of water into the steam generator chamber at least equal to an output value W₁ in the first operating mode and at least equal to W₂ in the second operating mode, W₁ being lower than W₂.

2. Steam cooking appliance according to claim 1, characterised in that the means for adjusting the admission of water into the steam generator chamber is a solenoid valve.

3. Steam cooking appliance according to claim 2, characterised in that the maximum opening of the solenoid valve for the output values W₁ and W₂ varies within the ranges [0-W₁], [0, W₂] depending upon the temperature of the steam generator chamber.

4. Steam cooking appliance according to one of claims 1 to 3, characterised in that the second operating mode constitutes the cleaning mode of the appliance.

5. Steam cooking appliance according to one of claims 1 to 4, characterised in that the steam inlet duct in the chamber of the appliance is extended inside the chamber by a tubular pipe provided with a plurality of openings in such a way as to ensure the satisfactory distribution of the steam over the walls of the appliance.

## Patentansprüche

1. Apparat zum Garen mit Dampf, mit einer Umfassung, die wenigstens Mittel zum Heizen mit Infrarotstrahlung und eine Aufnahme für Speisen, die vorzugsweise drehbar im Inneren der Umfassung angeordnet ist, aufweist, mit einem Dampferzeuger, der außerhalb der Umfassung angeordnet und mit dieser über eine Leitung für die Zufuhr von Dampf verbunden ist, wobei der Dampferzeuger eine Umfassung, die mit Heizmitteln versehen ist, eine Speisequelle für Wasser und Mittel zur Regulierung der Zufuhr von Wasser in die Umfassung des Dampferzeugers aufweist,
**dadurch gekennzeichnet**, daß der Apparat Auswahlmittel zur Auswahl einer ersten Arbeitsweise, bei der die Mittel zum Heizen mit Infrarotstrahlung und der Dampferzeuger arbeiten, und einer zweiten Arbeitsweise, bei der der Dampferzeuger arbeitet und die Mittel zum Heizen mit Infrarotstrahlung nicht arbeiten, aufweist, wobei die Auswahlmittel mit den Mitteln zur Regulierung der Zufuhr von Wasser in die Umfassung des Dampferzeugers zusammenwirken, um eine Zufuhr von Wasser in die Umfassung des Dampferzeugers zu erzielen, die bei der ersten Arbeitsweise höchstens einem Wert W₁ der Durchflußmenge und bei der zweiten Arbeitsweise höchstens einem Wert W₂ entspricht, wobei W₁ geringer ist als W₂.

2. Apparat nach Anspruch 1 zum Garen mit Dampf, **dadurch gekennzeichnet**, daß das Mittel zur Regulierung der Zufuhr von Wasser in die Umfassung des Dampferzeugers ein Magnetventil ist.

3. Apparat nach Anspruch 2 zum Garen mit Dampf, **dadurch gekennzeichnet**, daß die maximale Öffnung des Magnetventils für die Werte W₁ und W₂ innerhalb der Bereiche [0-W₁], [0-W₂] in Abhängigkeit von der Temperatur der Umfassung des Dampferzeugers variiert.

4. Apparat nach einem der Ansprüche 1 bis 3 zum Garen mit Dampf, **dadurch gekennzeichnet**, daß die zweite Arbeitsweise der Reinigungsmodus des Apparates ist.

5. Apparat nach einem der Ansprüche 1 bis 4 zum Garen mit Dampf, **dadurch gekennzeichnet**, daß die Leitung für die Zufuhr von Dampf in die Umfassung des Apparates in das Innere der Umfassung durch eine rohrförmige Rampe verlängert ist, die mit einer Mehrzahl von Öffnungen versehen ist, um eine korrekte Verteilung des Dampfes auf die Wandungen des Apparates zu gewährleisten.
